# EUROPÄISCHE PATENTANMELDUNG

(11) **EP 1 884 577 A2**
(43) Veröffentlichungstag der Anmeldung: **06.02.2008**
(21) Anmeldenummer: 07015281.4
(22) Anmeldetag: 03.08.2007
(51) Int. Cl.: C25D 5/48, C25D 15/00, A61C 8/00

(54) **Verfahren zur Herstellung eines keramischen Formkörpers mittels Elektrophorese und anschließender Sinterung und dessen Verwendung**

(30) Priorität: 05.08.2006 DE 102006036663
(71) Anmelder: Universität des Saarlandes, 66123 Saarbrücken (DE)
(72) Erfinder: Clasen, Ralf, Prof. Dr., 66125 Dudweiler (DE); Zeiner, Johannes, 66117 Saarbrücken (DE)

(57) **Zusammenfassung**

Verfahren zur Herstellung keramischer Formkörper, insbesondere von Zahnimplantaten, wobei in den anfänglichen Arbeitsschritten ein poröser Rohling auf einer Elektrode mittels Elektrophorese abgeschieden und anschließend getrocknet und lediglich angesintert wird, so dass eine Restporosität erhalten bleibt.

In den weiteren Herstellungsschritten wird weiteres Material mittels Elektrophorese auf dem Rohling zu dessen Verdichtung und weiteren Aufbau abgeschieden und dann lediglich in einem Teilbereich dichtgesintert, so dass der fertige Formkörper Bereiche unterschiedlicher Porosität aufweist.

## Beschreibung

Die Erfindung betrifft ein Verfahren zur Herstellung eines keramischen Formkörpers aus Zirkonoxid oder Aluminiumoxid oder Mischungen beider Stoffe mittels Elektrophorese und anschließender Sinterung. Durch die Erfindung wird eine Geometrie für ein Zahnimplantat und ein Verfahren zur Herstellung realisiert.

Zahnimplantate müssen auf Grund ihres Einsatzes in der Mundhöhle des Patienten mehrere grundlegende Eigenschaften erfüllen. Dabei müssen sie erstens inert gegen das Milieu im Mund bzw. gegen Speichel sein. Gleichzeitig sollen die Implantate jedoch auch das Einwachsen des Knochens fördern, so dass ein fester Verbund entsteht, der schlüssig im Kieferknochen verankert ist und Relativbewegungen des Implantats gegen das Hartgewebe verhindert. Man erreicht dies durch die Anpassung des Elastizitätsmoduls. Dies alles muss mit einer mechanischen Stabilität, d.h. einer hohen Bruchfestigkeit, kombiniert werden, die der Belastung des Kauens Stand hält. In der jüngsten Zeit kommen auch ästhetische Aspekte hinzu, so dass Materialien erwünscht sind, die die oben genannten technischen Eigenschaften mit einem natürlichen Aussehen vereinen.

Im Bereich der Keramiken haben sich bereits Aluminiumoxid, Zirkonoxid bzw. Verbunde aus beiden als Verblendungen bzw. als Kronen und Brücken etabliert. Neben ihren Festigkeitseigenschaften kommt ihre Farbe der natürlichen Farbe eines menschlichen Zahns sehr nahe.

Zahnimplantate hingegen werden meistens aus einem Titanwerkstoff gefertigt. Im Gegensatz zu Kronen ist dabei ein großflächiger Kontakt zwischen Implantat und menschlichem Gewebe gegeben, so dass ein solcher Implantatwerkstoff folgende Eigenschaften erfüllen muss:
1) nicht toxisch
2) beständig gegen Zellflüssigkeit
3) bioaktiv oder biofunktional
4) E-Modul nahe dem des umschließenden Gewebes (siehe M.S. Schwarz, Mechanical complications of dental implants. Clin. Oral Implants Res. 11 (2000) 156-158.)

Titan als Werkstoff für Zahnimplantate hat den Vorteil, dass sein E-Modul dem des Knochens sehr nahe kommt.

Die äußere Passivierungsschicht aus Titanoxid schirmt den Werkstoff gegen Angriffe im Milieu des Mundes ab, so dass Biofunktionalität gegeben ist. Bioaktivität hingegen wird nur durch Aufbringen einer aktiven Schicht, beispielsweise bestehend aus Hydroxylapatit oder Trikalziumphosphat, erreicht.

Große Nachteile entstehen jedoch bei Beschädigung der Passivschicht, da dann Ionen aus dem Implantatwerkstoff gelöst werden und ins Gewebe gelangen. Dies kann neben Entzündungen auch zur Zurückbildung des Zahnfleischs führen, wodurch der Zahnhals freiliegt und die graue Farbe des Werkstoffs zum Vorschein tritt. Damit sind neben den medizinischen Aspekten auch ästhetische Belange verletzt. Darüber hinaus muss ein solches Implantat in mehreren Schritten in den Kieferknochen einoperiert werden, wobei das Einschrauben zusammen mit dem Einwachsen in den Knochen den schwierigsten Teil darstellt.

Aus dem Stand der Technik (www.z-systems.com) sind ebenfalls vollkeramische Zahnimplantate aus Zirkonoxid bekannt. Aufgrund seiner hohen Festigkeit ist die Bearbeitung dieser Keramik jedoch mit einem hohen Werkzeugverschleiß verbunden, da dichtgesinterte Rohlinge bearbeitet werden müssen. Darüber hinaus werden diese zylinderförmigen Rohlinge mittels eines CAD/CAM Systems bearbeitet, so dass neben hohen Betriebskosten hohe Anschaffungskosten notwendig sind. Dies stellt für Zähntechniker oder Zahnärzte oftmals ein Problem dar. Unabhängig von dem hohen finanziellen Aufwand ergibt sich aus der Verwendung von Zirkonoxid mit Schraubgewinde ein großer Nachteil: Der diskontinuierliche Übergang zwischen Knochen und Implantat. Auf Grund der großen Differenz des E-Moduls kann es so zu Spannungen am Übergang kommen, welche zu einer Lockerung des Implantats führen.

Ebenfalls aus dem Stand der Technik (www.tenaximplant.com/dentist/index.html), sind Titanimplantate bekannt, bei denen das Schraubgewinde durch eine poröse Struktur aus Titan (mit Hydroxylapatit beschichtet) ersetzt ist. Dabei wird jedoch weder das Problem der Ästhetik gelöst, noch wird verhindert, dass Ionen bei Beschädigung des Titans in die Mundflora gelangen.

Der Erfindung liegt somit die Aufgabe zugrunde, ein Verfahren zur Herstellung eines keramischen Stiftzahns zu schaffen, der die eingangs beschriebenen Nachteile nicht aufweist.

Insbesondere ist Ziel der Erfindung ein Verfahren zur Herstellung eines keramischen Zahnimplantats, dessen Elastizitätsmodul im an den Knochen angrenzenden Bereich derart angepasst ist, dass Spannungen zwischen Knochen und Implantat, und damit die im Zusammenhang mit dem Stand der Technik erwähnten Nachteile weitestgehend vermieden werden. Des weiteren soll durch eine poröse Struktur im selben Bereich ein gutes Einwachsen in den Knochen erleichtert werden.

Diese Aufgabe wird dadurch gelöst, dass mittels des erfindungsgemäßen Verfahrens ein gradiert poröser Übergang zwischen Knochen und Implantat geschaffen wird, der den Elastizitätsmodul anpasst und gleichzeitig gewährleistet, dass Hartgewebezellen in das Implantat einwachsen können, um eine bessere Haftung (Osseointegration) zu erzielen.

Kernprozess des erfindungsgemäßen Verfahrens ist die elektrophoretische Abscheidung (EPD). Letztere hat sich als besonders vorteilhaft erwiesen, da die Bewegung der Teilchen im elektrischen Feld unabhängig von deren Größe ist, so dass Pulvermischungen verwendet werden können, um eine hohe Packungsdichte ohne Gradienten zu erreichen. Weitere Vorteile der EPD sind kurze Prozesszeiten, da die Abscheidung aus wässrigen Suspensionen sehr schnell auf Grund der hohen Dielektrizitätskonstante erfolgt. Außerdem wird bei der EPD eine homogene Porengrößenverteilung und eine homogene Dichteverteilung erzielt, so dass eine endkonturnahe Herstellung möglich ist, die kostenintensive Nachbearbeitungsschritte auf ein Minimum reduziert bzw. gänzlich vermeidet.

Entscheidend für die Herstellung des Zahns ist die poröse Struktur, in welche zum einen die Knochenzellen einwachsen sollen, zum anderen der Elastizitätsmodul angepasst werden soll.

Dazu werden erfindungsgemäß Suspensionen aus Pulvermischungen verschieden großer Partikel mit einem Füllgrad zwischen 40 und 80 Gew.-% zur Abscheidung verwendet und der pH-Wert wird zwischen 7 und 12 variiert, um eine optimal hohes negatives z-Potenzial zu erreichen, welches für die Stabilität einer Suspension kennzeichnend ist. Bei der Dispergierung des Pulvers in einer wässrigen Suspension kommt neben dem mechanischen Dispergieren mittels eines Labor-Dissolvers auch eine Ultraschallbehandlung zum Einsatz, welche eine bessere Dispergierung ermöglicht.

Die Ultraschallbehandlung führt dabei zu einer besseren Dispergierung im Vergleich zur rein mechanischen Methode, so dass bei der Abscheidung aus diesen Suspensionen höhere Gründichten erzielt werden, die wiederum zu einem geringeren Sinterschrumpf führen. Darüber hinaus kann man durch diese Dispergierung eine kleine Porengröße im abgeschiedenen Grünkörper erzielen, welche ein Maßschneidern der notwendigen Porengröße für die Anwendung als Zahnimplantat zulässt.

Da eine hohe Festigkeit für das Implantat notwendig ist, wobei gleichzeitig eine Anpassung des E-Moduls über die Porosität erreicht werden soll, müssen die Körner des Gefüges so klein wie möglich sein.

Erfindungsgemäß wird das Kornwachstum durch eine Zweischrittsinterung unterdrückt. Dazu wird zunächst mit einer Heizrate von beispielsweise10 K/min auf eine Temperatur T₁ geheizt, bei der die Probe für eine Zeit t₁ gehalten wird. Danach wird auf eine Temperatur T₂ gekühlt, wobei der Grünling auf dieser Temperatur für eine Zeit t₂ gehalten wird.

Als besonders vorteilhaft für das erfindungsgemäße Verfahren haben sich dabei folgende Parameter erwiesen: 30 min für t₁ und 5h für t₂, sowie die Temperaturen 1200 °C für T₁ und 1050 °C für T₂.

Im folgenden soll die Erfindung anhand zweier Abbildungen näher erläutert werden. Dabei zeigen:
- Fig. 1: eine in mehreren Prozessschritten mittels EPD hergestellte, poröse Struktur
- Fig. 2: die aus der porösen Struktur aus Fig. 1 hergestellte Prototypstruktur eines vollkeramischen Zahnimplantats mit gradiert-porösem Implantat-Hartgewebe-Übergang zur besseren Osseointegration.

Wie bereits zuvor erwähnt, stellt die elektrophoretische Abscheidung (EPD) den Kernprozess zur Durchführung des erfindungsgemäßen Herstellungsverfahrens dar.

Dazu wird ein dünner Metalldraht zur Verfügung gestellt, welcher als Elektrode 1 für die Abscheidung eines Formkörpers dienen soll. Der Metalldraht besteht in bevorzugter Weise entweder aus einem bei der Abscheidung inerten Material wie z.B. Platin, oder aber aus Zink, welches den Vorteil hat, dass bei Abscheidung auf einer Zinkelektrode keine Gasblasen entstehen, sondern Zink oxidiert wird.

Letzteres hat zusätzlich einen medizinischen Vorteil, da Zinkoxid in der Zahnmedizin zur Wundheilung und als Zusatz in Wurzelfüllpasten eingesetzt wird und somit ein Einheilen des Implantats begünstigt.

Auf besagte Elektrode 1 wird aus einer Suspension direkt abgeschieden und zwar bis zu einem Gesamtdurchmesser d₁, beispielsweise 2 mm. Danach wird der Formkörper getrocknet und angesintert. Dabei wird mit dem zuvor beschriebenen Zweitschritt-Sinterprogramm eine kleine Korngröße erreicht, wobei die Porosität zum Teil erhalten bleibt, um die Voraussetzungen für die folgende Imprägnierung zu garantieren.

Im weiteren Verfahren wird die entstandene Anordnung nach der Membranmethode genutzt. Dabei bleibt die Elektrode 1 die selbe oder kann ersetzt werden. Die erste Abscheidung 2 dient als Membran, welche zur Erhöhung der Leitfähigkeit zuvor getränkt wird.

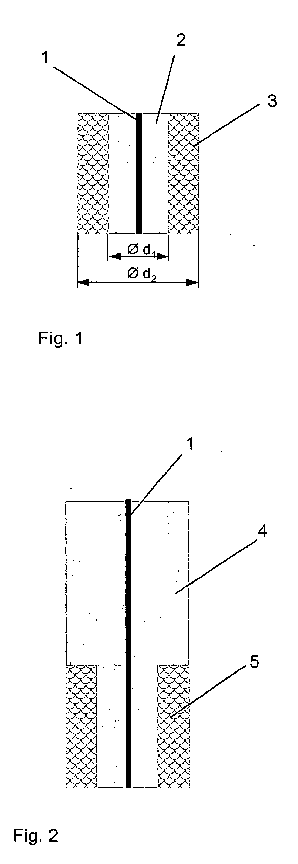

Zur weiteren Verdichtung der Abscheidung 2 und zum weiteren Aufbau des Formkörpers wird dabei mittels EPD aus wässrigen Suspensionen weiteres Material 3 bis zum gewünschten Durchmesser d₂ abgeschieden, der dem Durchmesser des gewünschten Zahnkopfes 4 in Fig. 2 entspricht.

In einem weiteren Prozessschritt wird die nun aus Elektrode 1, erster, bereits verdichteter Abscheidung 2 und zweiter Abscheidung 3 bestehende Struktur erneut gesintert.

Die so erlangte Struktur weist im Bereich der ersten Abscheidung 2 wesentlich geringere Porosität auf als die sie umgebende zweite Abscheidung 3.

Die abschließende Sinterung wird beispielsweise mittels eines Gradientenofens so gewählt, dass der Kopf 4 des Implantats dichtgesintert wird. Im Gegensatz dazu weist der von der zweiten Abscheidung 3 gebildete, poröse Gradient 5 eine Porengröße auf, die das Ansiedeln und Einwachsen von Knochenzellen ermöglicht und gleichzeitig einen E-Modul nahe dem des Hartgewebes hat.

Da je nach Dicke des Drahts nach dem Sintern und damit dem Ausheizen der Elektrode ein zylindrischer Hohlraum entsteht, wird dieser zur Fixierung einer Verblendung genutzt. In einer besonderen Ausführungsform der Erfindung wurde auch Zement als Füllmaterial getestet.

Eine weitere Ausführungsform der Erfindung zur verbesserten Einstellung des Porengradienten ist die Einstellung einer Makroporosität , welche durch die gezielte Gasblasenbildung an den Elektroden bei der Abscheidung aus wässrigen Suspensionen an den Elektroden entsteht. Dabei wird auf einen 100 µm dicken Platindraht aus einer wässrigen Suspension abgeschieden.

Nachfolgend wird die Erfindung anhand eines Ausführungsbeispiels näher erläutert.

### Ausführungsbeispiel:

Eine wässrige Zirkonoxidsuspension mit einem Füllgrad von 80 Gew.-% wird hergestellt, in dem 80 g yttriumstabilisiertes Zirkonoxidpulver in 19 g bidestilliertem Wasser dispergiert wird, welchem 1 g TMAH (Tetramethylammoniumhydroxid) zugesetzt ist. Eine auf diese Art und Weise hergestellte Suspension hat einen pH-Wert von 11,7 und eine Leitfähigkeit von 0,7 mS/cm.

Danach wird die Suspension in ein zylindrisches Metallgefäß mit einer Höhe von 15 cm und einem Durchmesser von 3 cm gefüllt, welches als Kathode dient.

Die Anode ist ein Zinkdraht einer Dicke von 100 µm, welcher zentrisch zum Metallgefäß zu einer Tiefe von 2,5 cm in die Suspension eintaucht.

Anschließend wird an Anode und Kathode eine Potenzialdifferenz von 15 V für 2 min angelegt. So entsteht ein poröser Formkörper mit einer mittleren Porengröße von 3 µm und einem Porenanteil von 12 Vol.-%.

Nach der Trocknung wird dieser mit einer Heizrate von 10 K/min auf eine Temperatur von 1200 °C gebracht, bei dieser Temperatur 30 min gehalten und dann auf eine Temperatur von 1050 °C abgekühlt, bei der er 5 h verbleibt. Der so entstandene Körper hat eine offene Porosität von 3 Vol.-%.

Anschließend wird dieser Sinterkörper als Membran für die Abscheidung aus wässrigen Medien verwendet. Dazu wird er in Wasser mit TMAH getränkt, welches eine Leitfähigkeit von 7 mS/cm hat. Danach wird dieser getränkte Formkörper ganz in die Suspension getaucht, bevor an einen neu eingesetzten Zinkdraht und das umgebende Metallgefäß eine Potenzialdifferenz von 20 V für 5 min angelegt wird.

In einer weiteren, alternativen Ausführung des Verfahrens wird die Suspension der ersten Abscheidung genutzt, so dass die Aufbereitung einer neuen entfällt.

Nach Entformen wird der nachverdichtete Grünling getrocknet und schließlich bei einer Temperatur von 1700 °C für 2h gesintert (Heizrate 10 K/min). Dadurch wird die erste Abscheidung, welche vorverdichtet war, zu 99,99 %TD (=theoretischer Dichte) gesintert, wohingegen die von der zweiten Abscheidung stammende Imprägnierschicht noch eine Porosität von 5 Vol.-% und einen mittlere Porengröße von 400 nm aufweist. In diesem Stadium besteht noch die Möglichkeit, das Implantat spanend zu bearbeiten und den Werkzeugverschleiß gering zu halten.

Die abschließende Sinterung wird in einem Gradientenofen durchgeführt, in welchem nur der obere Part des Implantats ("Kopf") bei einer Temperatur von 1800°C für 90 min (Heizrate 10 K/min) für 30 min gesintert wird. Dadurch wird dort eine Dichte von 99,99 %TD erreicht. Das so hergestellte Implantat weist die Geometrie auf, wie sie in Fig. 2 dargestellt ist.

Zusammenfassend lässt sich das Herstellungsverfahren durch folgende Arbeitsschritte beschreiben:
- Abscheidung eines porösen Rohlings auf einer Elektrode mittels Elektrophorese aus einer wässrigen Suspension von Zirkonoxid- oder Aluminiumoxidpulver oder Mischungen beider Pulver
- Trocknen und Ansintern des porösen Rohlings derart, dass dessen Porosität zum Teil erhalten bleibt
- Abscheidung weiteren Materials auf dem Formkörper zu dessen weiteren Verdichtung und weiteren Aufbau
- Dichtsintern eines Teilbereichs des Formkörpers

## Patentansprüche

1. Verfahren zur Herstellung eines keramischen Formkörpers, bei dem
- auf einer Elektrode aus einer wässrigen Suspension von Zirkonoxid- oder Aluminiumoxidpulver oder Mischungen beider Pulver durch Abscheidung mittels Elektrophorese ein poröser Rohling aufgebaut wird,
- der erhaltene Rohling getrocknet und derart angesintert wird, dass dessen Porosität zum Teil erhalten bleibt,
- zur weiteren Verdichtung und dem weiteren Aufbau des Formkörpers mittels der Elekrode weiteres Material abgeschieden wird
- und abschließend ein Teilbereich des Formkörpers dichtgesintert wird.

2. Verfahren gemäß Anspruch 1, **dadurch gekennzeichnet, dass** für die Elektrophorese Suspensionen mit einem Füllgrad zwischen 40 und 80 Gew%, vorzugsweise 80 Gew%, zur Abscheidung auf der Elektrode eingesetzt werden.

3. Verfahren nach einem der Ansprüche 1 bis 2, **dadurch gekennzeichnet, dass** für die Elektrophorese Suspensionen mit einem ph-Wert zwischen 7 und 12 eingesetzt werden.

4. Verfahren nach einem der Ansprüche 1 bis 3, **dadurch gekennzeichnet, dass** für die elektrophoretische Abscheidung zwischen den Elektroden Gleichspannungen von 5 V bis 200 V angelegt werden.

5. Verfahren nach einem der Ansprüche 1 bis 4, **dadurch gekennzeichnet, dass** für die für die Abscheidung des Grünkörpers vorgesehene Elektrode die Metalle Zink oder Platin, vorzugsweise Zink, eingesetzt werden.

6. Verfahren nach einem der Ansprüche 1 bis 5, **dadurch gekennzeichnet, dass** die Sinterungen bei Temperaturen zwischen 1000 °C und 2000 °C erfolgen.

7. Verfahren nach Anspruch 6, **dadurch gekennzeichnet, dass** die Sinterungen jeweils mit Sinterzeiten von 20 min bis 5 h erfolgen.

8. Verfahren nach einem der Ansprüche 1 bis 7, **dadurch gekennzeichnet, dass** während der Elektrophorese ein rotationssymmetrischer, keramischer Grünkörper abgeschieden wird.

9. Verwendung eines nach einem der vorhergehenden Ansprüche hergestellten keramischen Formkörpers für keramische Zahnimplantate.
